# EUROPÄISCHE PATENTSCHRIFT

(11) **EP 1 191 453 B1**
(45) Veröffentlichungstag und Bekanntmachung des Hinweises auf die Patenterteilung: **12.11.2008**
(21) Anmeldenummer: 01121004.4
(22) Anmeldetag: 31.08.2001
(51) Int. Cl.: G06F 13/24

(54) **Vorrichtung zur Auswahl und Weiterleitung von empfangenen Unterbrechungsanfragen gemäss konfigurierbarer Konditionen**
Apparatus to select and transmit received interrupt requests according to configurable conditions
Dispositif de sélection et de transmission de requêtes d'interruption selon des conditions configurables

(30) Priorität: 22.09.2000 DE 10047185
(43) Veröffentlichungstag der Anmeldung: 27.03.2002
(73) Patentinhaber: Infineon Technologies AG, 81669 München (DE)
(72) Erfinder: Barrenscheen, Jens, Dr., 81669 München (DE)
(74) Vertreter: Jannig, Peter

(56) Entgegenhaltungen:
- WO-A-00/36519
- US-A- 5 640 571
- US-A- 5 905 913
- US-A- 6 115 779

## Beschreibung

Die vorliegende Erfindung betrifft eine Vorrichtung gemäß dem Oberbegriffdes Patentanspruchs 1.

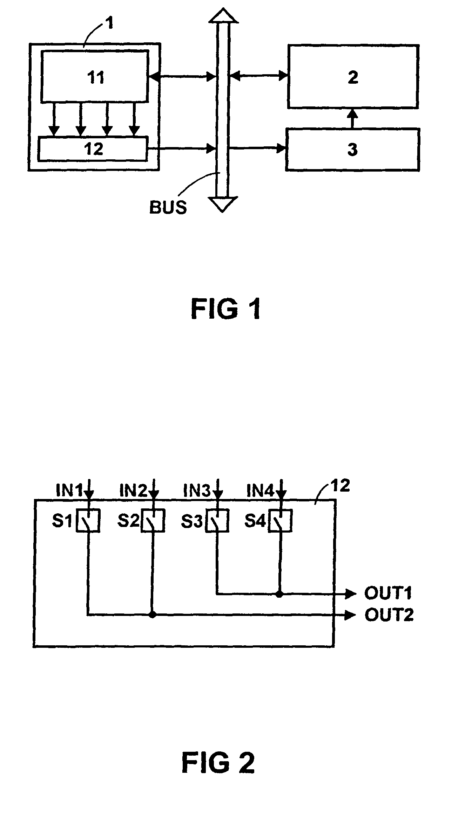

Eine eine Vorrichtung zur Weiterleitung von empfangenen Interrupt Requests enthaltende Anordnung ist in Figur 1 gezeigt.

Die gezeigte Anordnung ist ein Halbleiterbaustein wie beispielsweise ein Mikrocontroller oder ein Bus-Controller. Der Vollständigkeit halber sei darauf hingewiesen, daß von der betrachteten Anordnung nur die vorliegend besonders interessierenden Bestandteile gezeigt sind und beschrieben werden.

Die Anordnung enthält ein erstes Modul 1, ein zweites Modul 2, einen Interrupt Controller 3, und einen die genannten Bestandteile miteinander verbindenden Bus BUS.

Das erste Modul 1 ist ein Modul, das zu gewissen Zeitpunkten oder beim Auftreten bestimmter Ereignisse das zweite Modul 2 zu bestimmten Aktionen veranlassen muß. Die Veranlassung erfolgt unter Verwendung von Interrupt Requests, die das erste Modul 1 an den Interrupt Controller 3 ausgibt und dieser entsprechend der den Interrupt Requests zugeordneten Prioritäten sofort oder später an das zweite Modul 2 weiterleitet.

Das erste Modul 1 ist beispielsweise ein A/D-Wandler, ein D/A-Wandler, oder ein Kommunikations-Controller, durch welchen der gezeigte Baustein über einen in der Figur 1 nicht gezeigten weiteren Bus (beispielsweise einen CAN-Bus) mit anderen Systemkomponenten verbunden werden kann; das zweite Modul 2 ist beispielsweise eine CPU oder ein DMA-Controller.

Das erste Modul 1 enthält einen das Modul steuernden Kernel 11 und eine Interrupt-Conditioning-Einheit 12. Die Interrupt-Conditioning-Einheit 12 ist die vorliegend betrachtete Vorrichtung zur Weiterleitung von empfangenen Interrupt Requests; sie erhält vom Kernel 11 verschiedene Interrupt Requests und gibt diese in einer in ihr festgelegten Art und Weise aus dem ersten Modul 1 über den Bus BUS an den Interrupt Controller 3 aus.

Ein möglicher Aufbau der Interrupt-Conditioning-Einheit 12 ist in Figur 2 veranschaulicht. Die in der Figur 2 gezeigte Interrupt-Conditioning-Einheit 12 hat vier Eingangsanschlüsse IN1 bis IN4 und zwei Ausgangsanschlüsse OUT1 und OUT2, wobei die Eingangsanschlüsse IN1 bis IN4 zur Entgegennahme von vom Kernel 11 stammenden Interrupt Requests, und die Ausgangsanschlüsse OUT1 und OUT2 zur Ausgabe der an den Interrupt Controller 3 weiterzuleitenden Interrupt Requests dienen. Der Vollständigkeit halber sei angemerkt, daß die Anzahl der Eingangsanschlüsse und die Anzahl der Ausgabeanschlüsse unabhängig voneinander beliebig größer oder kleiner sein kann. Die Anzahl der Eingangsanschlüsse entspricht vorzugsweise der Anzahl der verschiedenen Interrupt Requests, die der Kernel 11 erzeugen kann, und die Anzahl der Ausgangsanschlüsse entspricht vorzugsweise der Anzahl der Eingangsanschlüsse des Interrupt Controllers 3.

Jedem der Eingangsanschlüsse IN1 bis IN4 ist ein Schalter nachgeschaltet, durch welchen festgelegt wird, ob ein dem jeweiligen Eingangsanschluß zugeführtes Interrupt-Request-Signal von der Interrupt-Conditioning-Einheit 12 angenommen wird oder nicht. Diese, durch den Kernel 11 oder die Interrupt-Conditioning-Einheit 12 steuerbaren Schalter sind in der Figur 2 mit den Bezugszeichen S1 bis S4 bezeichnet. Hinter den Schaltern S1 bis S4 werden die der Interrupt-Conditioning-Einheit 12 vom Kernel 11 zugeführten Interrupt Requests auf die Ausgangsanschlüsse OUT1 und OUT2 verteilt; Interrupt Requests, die im zweiten Modul 2 die selbe Aktion auslösen sollen, werden über die selben Ausgangsanschlüsse OUT1 und OUT2 ausgegeben.

Beim Entwurf neuer Halbleiterbausteinen wird angestrebt, bereits in anderen Halbleiterbausteinen verwendete Bestandteile möglichst unverändert zu übernehmen. Dies ist bei der Interrupt-Conditioning-Einheit 12 jedoch nur bedingt möglich. Dies liegt insbesondere daran,
- daß die Zuordnung der Interrupt Requests zu den Ausgangsanschlüssen der Interrupt-Conditioning-Einheit 12 an den zum Einsatz kommenden Kernel 11 und an den zum Einsatz kommenden Interrupt Controller 3 angepaßt werden muß, und
- daß die durch einen Interrupt Request im zweiten Modul 2 veranlaßte Aktion, beispielsweise die Datenmenge, die auf einen Interrupt Request hin vom zweiten Modul 2 zum ersten Modul transferiert wird, bei verschiedenen zweiten Modulen 2 unterschiedlich sein kann.

Dies hat zur Folge, daß sowohl der Einsatz des ersten Moduls 1 in einer anderen Umgebung als auch der Einsatz der Interrupt-Conditioning-Einheit 12 in einem anderen ersten Modul häufig überhaupt nicht oder nur nach einer mehr oder weniger umfangreichen Modifikationen von Kernel 11 und/oder Interrupt-Conditioning-Einheit 12 möglich ist.

Dies ist ein Umstand, der den Entwurf neuer Halbleiterbausteine erheblich erschwert und verteuert.

Weitere Vorrichtungen zur Weiterleitung von empfangenen Interrupt Requests sind aus der US-A-5 640 571 und der US-A-5 905 913 bekannt. Dabei ist die in der US-A-5 640 571 beschriebene Vorrichtung eine Vorrichtung gemäß dem Oberbegriff des Patentanspruchs 1.

Weitere Vorrichtungen zur Weiterleitung von Interrupt Requests sind aus der US-A-6 115 779 und der WO 00/36519 A bekannt. Die in diesen Dokumenten beschriebenen Vorrichtungen sind jedoch nur Vorrichtungen zur Weiterleitung selbst erzeugter Interrupt Requests.

Von den vorstehend genannten Dokumenten offenbart keines eine zufriedenstellende Lösungen für das oben angesprochene Problem.

Der vorliegenden Erfindung liegt daher die Aufgabe zugrunde, die Vorrichtung gemäß dem Oberbegriff des Patentanspruchs 1 derart weiterzubilden, daß sie flexibler einsetzbar ist als es bisher der Fall ist.

Diese Aufgabe wird durch die in Patentanspruch 1 beanspruchte Vorrichtung gelöst.

Eine derartige Vorrichtung zur Weiterleitung von empfangenen Interrupt Requests kann insbesondere, aber nicht ausschließlich dann, wenn die erste Anzahl und die zweite Anzahl einstellbar sind, ohne oder jedenfalls ohne aufwendige Anpassungen an die Komponenten, mit welchen die Vorrichtung und/oder das diese enthaltende Modul kooperieren muß, in den unterschiedlichsten Modulen und Systemen eingesetzt werden.

Die beanspruchte Vorrichtung zur Weiterleitung von empfangenen Interrupt Requests ist damit wesentlich flexibler einsetzbar als es bei bekannten Vorrichtungen dieser Art der Fall ist.

Vorteilhafte Weiterbildungen der Erfindung sind den Unteransprüchen, der nachfolgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: eine eine Vorrichtung zur Weiterleitung von empfangenen Interrupt Requests enthaltende Anordnung,
- Figur 2: den Aufbau einer herkömmlichen Vorrichtung zur Weiterleitung von empfangenen Interrupt Requests,
- Figuren: 3 und 4 flexibler einsetzbare Vorrichtungen zur Weiterleitung von empfangenen Interrupt Requests, und
- Figur 5: den Aufbau einer der in der Vorrichtung gemäß Figur 4 enthaltenen Anpassungseinheiten.

Die im folgenden beschriebenen Vorrichtungen zur Weiterleitung von empfangenen Interrupt Requests sind zur Verwendung als Interrupt-Conditioning-Einheit 12 der in der Figur 1 gezeigten Anordnung ausgelegt; sie können aber auch in beliebigen anderen Anordnungen zum Einsatz kommen.

Die im folgenden beschriebenen Interrupt-Conditioning-Einheiten haben die selbe oder eine ähnliche Funktion wie die eingangs unter Bezugnahme auf die Figur 2 beschriebene herkömmliche Interrupt-Conditioning-Einheit 12. D.h., sie dienen dazu, innerhalb des die Interrupt-Conditioning-Einheit 12 enthaltenden Moduls 1 erzeugte Interrupt Requests nach bestimmten Vorschriften zu behandeln und aus dem Modul 1 auszugeben.

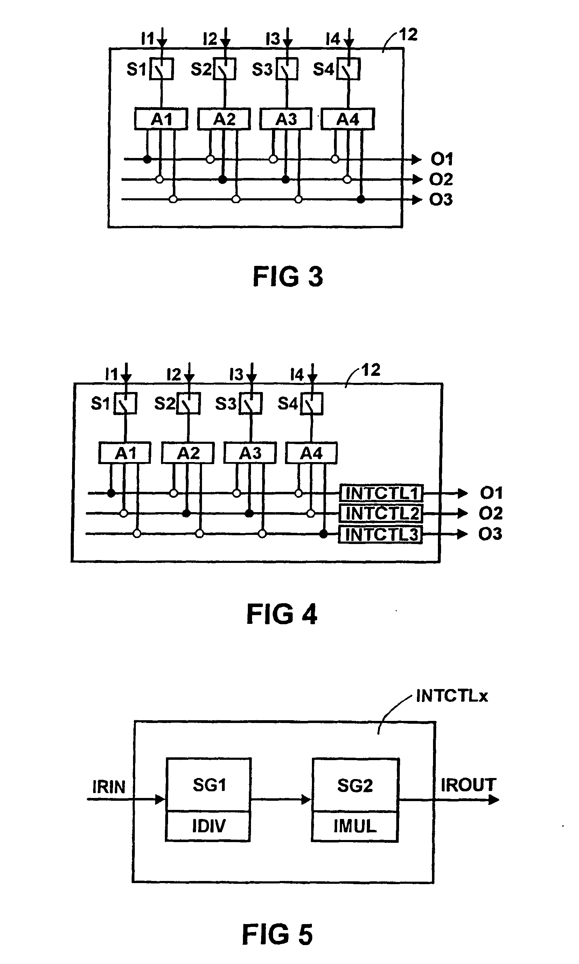

Die erste dieser Interrupt-Conditioning-Einheiten ist in Figur 3 dargestellt.

Die in der Figur 3 gezeigte Interrupt-Conditioning-Einheit hat vier Eingangsanschlüsse I1 bis I4 und drei Ausgangsanschlüsse O1 bis 03, wobei die Eingangsanschlüsse I1 bis I4 (wie die Eingangsanschlüsse IN1 bis IN4 der Interrupt-Conditioning-Einheit gemäß Figur 2) zur Zuführung von vom Kernel 11 stammenden Interrupt Requests, und die Ausgangsanschlüsse O1 bis 03 (wie die Ausgangsanschlüsse OUT1 und OUT2 der Interrupt-Conditioning-Einheit gemäß Figur 2) zur Ausgabe der an den Interrupt Controller 3 weiterzuleitenden Interrupt Requests dienen. Der Vollständigkeit halber sei angemerkt, daß auch bei dieser Interrupt-Conditioning-Einheit die Anzahl der Eingangsanschlüsse und die Anzahl der Ausgabeanschlüsse unabhängig voneinander beliebig größer oder kleiner sein kann.

Jedem der Eingangsanschlüsse I1 bis I4 ist ein Schalter nachgeschaltet, durch welchen festgelegt wird, ob ein dem jeweiligen Eingangsanschluß zugeführtes Interrupt-Request-Signal von der Interrupt-Conditioning-Einheit angenommen wird oder nicht. Diese Schalter sind in der Figur 3 mit den Bezugszeichen S1 bis S4 bezeichnet und entsprechen den mit den selben Bezugszeichen bezeichneten Schaltern der Interrupt-Conditioning-Einheit gemäß Figur 2. Den Schaltern S1 bis S4 sind Zuordnungseinheiten A1 bis A4 nachgeschaltet, durch welche wunschgemäß festlegbar ist, ob ein bei ihnen ankommendes Interrupt-Request-Signal über den ersten Ausgangsanschluß OUT1, den zweiten Ausgangsanschluß OUT2 oder den dritten Ausgangsanschluß OUT3 ausgegeben werden soll. Die Zuordnung der einzelnen Interrupt Requests zu den Ausgangsanschlüssen, über welche sie ausgegeben werden, ist im betrachteten Beispiel über in den Zuordnungseinheiten A1 bis A4 eingestellte oder gespeicherte Zuordnungs-Daten (Interrupt Node Pointer) wunschgemäß einstellbar, wodurch sie ohne Veränderung des Aufbaus der Interrupt-Conditioning-Einheit wunschgemäß festlegbar ist. Die Zuordnung ist vorzugsweise dynamisch (während des Betriebes der Interrupt-Conditioning-Einheit) veränderbar; dadurch läßt sich die Interrupt-Conditioning-Einheit noch besser an die jeweils herrschenden Bedingungen anpassen. Im in der Figur 3 dargestellten Beispiel ist die Zuordnung so festgelegt,
- daß über den Eingangsanschluß I1 eingegebene Interrupt Requests über den Ausgangsanschluß O1 ausgegeben werden,
- daß über die Eingangsanschlüsse I2 und I3 eingegebene Interrupt Requests über den Ausgangsanschluß O2 ausgegeben werden, und
- daß über den Eingangsanschluß I4 eingegebene Interrupt Requests über den Ausgangsanschluß O3 ausgegeben werden.

Die Interrupt-Conditioning-Einheit läßt sich noch flexibler einsetzen, wenn sie wie in Figur 4 gezeigt aufgebaut ist. Die in der Figur 4 gezeigte Interrupt-Conditioning-Einheit basiert auf der in der Figur 3 gezeigten Interrupt-Conditioning-Einheit, weist aber zusätzlich vor den Ausgangsanschlüssen O1 bis O3 jeweils eine Anpassungseinheit auf, die dafür sorgt,
- daß die Interrupt-Conditioning-Einheit erst nach dem Empfang von mehrere Interrupt Requests einen Interrupt Request ausgibt, und/oder
- daß die Interrupt-Conditioning-Einheit auf den Empfang eines Interrupt Requests hin mehrere Interrupt Requests ausgibt, und/oder
- daß die Interrupt-Conditioning-Einheit mit der Ausgabe eines Interrupt Requests wartet, bis davon ausgegangen werden kann, daß die durch einen zuvor ausgegebenen Interrupt Request anzustoßende Operation ausgeführt wurde.

Diese Anpassungseinheiten sind in der Figur 4 mit den Bezugszeichen INTCTL1 bis INTCTL3 bezeichnet. Die Anpassungseinheiten weisen einen identischen Aufbau auf. Der Aufbau einer solchen Anpassungseinheit ist in Figur 5 veranschaulicht.

Gemäß Figur 5 weist die Anpassungseinheit einen Eingangsanschluß IRIN und einen Ausgangsanschluß IROUT auf und enthält
- eine erste Signalerzeugungsvorrichtung SG1, welche nur jeweils nach einer bestimmten Anzahl von empfangenen Interrupt Requests einen Interrupt Request weiterleitet oder ein einen Interrupt Request repräsentierendes Signal erzeugt, und
- und eine zur ersten Signalerzeugungsvorrichtung SG1 in Reihe geschaltete zweite Signalerzeugungsvorrichtung SG2, welches bei jedem Empfang eines Interrupt Requests eine bestimmte Anzahl von Interrupt Requests repräsentierenden Signalen erzeugt.

Die erste Signalerzeugungsvorrichtung SG1 und die zweite Signalerzeugungsvorrichtung SG2 enthalten im betrachteten Beispiel Zähler, wobei
- der in der ersten Signalerzeugungsvorrichtung SG1 enthaltene Zähler die empfangenen Interrupt Requests zählt und bei Erreichen eines statisch oder dynamisch einstellbaren Zählstandes IDIV
   - veranlaßt, daß ein Interrupt Request weitergeleitet oder ein einen Interrupt Request repräsentierendes Signal erzeugt wird, und
   - wieder bei 0 zu zählen beginnt, und
- der in der zweiten Signalerzeugungsvorrichtung SG2 enthaltene Zähler die nach dem Empfang eines Interrupt Requests daraufhin in der zweiten Signalerzeugungsvorrichtung SG2 erzeugten und ausgegebenen Interrupt Requests zählt und bei Erreichen eines statisch oder dynamisch einstellbaren Zählstandes IMUL
   - veranlaßt, daß die zweite Signalerzeugungsvorrichtung SG2 keine weiteren Interrupt Requests erzeugt und ausgibt, und
   - wieder bei 0 zu zählen beginnt.

Durch die erste Signalerzeugungsvorrichtung SG1 und die zweite Signalerzeugungsvorrichtung SG2 können die vom Kernel 11 ausgegebenen Interrupt Requests in eine beliebige andere Folge von Interrupt Requests umgesetzt werden.

Die erste Signalerzeugungsvorrichtung SG1 erweist sich beispielsweise als vorteilhaft, wenn vom Kernel 11 des ersten Moduls 1 zur Abholung bereitgestellte Daten durch das zweite Modul 2 paketweise abgeholt und/oder weiterverarbeitet werden sollen oder müssen, der Kernel 11 aber für jedes einzelne Datum, das er zur Abholung bereitstellt, einen Interrupt Request erzeugt.

Die zweite Signalerzeugungsvorrichtung SG2 erweist sich beispielsweise als vorteilhaft, wenn vom Kernel 11 des ersten Moduls 1 Datenpakete zur Abholung bereitgestellt werden, die, beispielsweise wegen einer zu geringen Busbreite, durch das zweite Modul 2 nur durch mehrere aufeinanderfolgende und durch eigene Interrupt Requests anzustoßende Operationen abgeholt werden können, der Kernel 11 aber pro Datenpaket nur einen einzigen Interrupt Request erzeugt.

Die Möglichkeiten, die die erste Signalerzeugungsvorrichtung SG1 und die zweite Signalerzeugungsvorrichtung SG2 bieten, lassen sich auch kombinieren. Als Beispiel sei eine Applikation genannt, bei welcher in einem Puffer des Kernel 11 des ersten Moduls 1 Daten zur Abholung durch das zweite Modul 2 bereitgestellt werden, wobei
- der Puffer durch den Kernel 11 byteweise beschrieben wird und der Kernel nach jedem Einschreiben eines Byte einen Interrupt Request abgibt,
- der Puffer erst ausgelesen werden darf, wenn 12 Bytes im Puffer gespeichert sind,
- das Auslesen des Puffers durch das zweite Modul 2 in Einheiten von Bytes erfolgt und das Auslesen jedes Bytes durch einen eigenen Interrupt Request angestoßen werden muß.

Dies läßt sich durch Programmieren von IDIV und IMUL mit 12 erreichen. IDIV=12 bewirkt, daß der erste Interrupt Request des Kernel 11, der die zweite Signalerzeugungsvorrichtung SG2 erreicht, der vom Kernel 11 nach dem Einschreiben des 12. Byte in den Puffer ausgegebene Interrupt Request ist. IMUL=12 bewirkt, daß die zweite Signalerzeugungsvorrichtung SG2 nach dem Empfang eines Interrupt Request 12 Interrupt Requests erzeugt und ausgibt.

Für den Fall, daß das zweite Modul 2 die Daten in Einheiten von zwei Bytes aus dem Puffer ausliest, müßte IDIV mit 12, und IMUL mit 6 programmiert werden; für den Fall, daß das zweite Modul 2 die Daten in Einheiten von vier Bytes aus dem Puffer ausliest, müßte IDIV mit 12, und IMUL mit 3 programmiert werden.

Aus den vorstehenden Erläuterungen ist ersichtlich, daß sich durch die Signalerzeugungsvorrichtungen SG1 und SG2 beliebige Konstellationen handhaben lassen.

Der Vollständigkeit halber sei angemerkt, daß die erwähnten Zählstände IDIV und IMUL auch 1 betragen können. In diesem Fall sind die erste Signalerzeugungsvorrichtung SG1 und die zweite Signalerzeugungsvorrichtung SG2 ohne Wirkung.

Es dürfte einleuchten, daß keine Einschränkung darauf besteht, die Anpassungseinheiten wie in der Figur 5 gezeigt und unter Bezugnahme darauf beschrieben aufzubauen und anzuordnen; es ist eine Vielzahl anderer Realisierungsmöglichkeiten denkbar. Beispielsweise wäre denkbar, die Anpassungseinheiten nur mit der ersten Signalverarbeitungsvorrichtung SG1 oder nur mit der zweiten Signalverarbeitungsvorrichtung SG2 oder entsprechenden anderen Einrichtungen auszustatten. Außerdem können die Anpassungseinheiten an einer anderen Stelle innerhalb der Interrupt-Conditioning-Einheit angeordnet werden, beispielsweise vor den Schaltern S1 bis S4. Ferner kann, beispielsweise um gegenseitige Störungen der Interrupt Requests auszuschließen, vorgesehen werden, daß die Anpassungseinheiten
- die Stellung der Schalter S1 bis S4 vorübergehend verändern,
- die Zuordnungseinheiten A1 bis A4 vorübergehend umprogrammieren, und/oder
- Interrupt Requests zwischenspeichern und später weiterleiten.

Als sehr vorteilhaft kann es sich auch auswirken, wenn die Interrupt-Conditioning-Einheit vor der Ausgabe eines Interrupt Request überprüft, ob der zuletzt über den selben Ausgabeanschluß ausgegebene Interrupt Request, genauer gesagt die durch diesen anzustoßende Operation auch ausgeführt wurde, und den nächsten Interrupt Request erst dann ausgibt, wenn festgestellt wurde, daß die durch den vorhergehenden Interrupt Request anzustoßende Operation ausgeführt wurde. Für den Fall, daß die auszuführende Operation darin besteht, daß Daten in die erste Einheit 1 einzuschreiben oder aus dieser auszulesen waren, könnte diese Überprüfung anhand des Schreib-/Lesesignals erfolgen, welches dem auszulesenden oder zu beschreibenden Speicher des ersten Moduls 1 zugeführt werden muß, damit dieser ausgelesen oder beschrieben werden kann.

Bei der in der Figur 5 gezeigten Interrupt-Conditioning-Einheit wird dieses Signal oder ein anderes Signal, anhand dessen sich die Ausführung der durch den vorhergehenden Interrupt Request anzustoßenden Operation überprüfen läßt, vorzugsweise der zweiten Signalerzeugungsvorrichtung zugeführt und in dieser überprüft.

Eine solche Überprüfung kann sich auch bei anderen Interrupt-Conditioning-Einheiten als der in den Figuren 4 und 5 gezeigten und unter Bezugnahme darauf beschriebenen Interrupt-Conditioning-Einheit, beispielsweise auch bei den in den Figuren 2 und 3 gezeigten und unter Bezugnahme darauf beschriebenen Interrupt-Conditioning-Einheiten als vorteilhaft erweisen.

Ferner besteht auch keine Einschränkung darauf, die Anpassungseinheiten in einer Interrupt-Conditioning-Einheit der in der Figur 3 gezeigten Art einzusetzen. Die Zuordnungseinheiten, die Anpassungseinheiten, und die abhängig von der Ausführung eines vorher ausgegebenen Interrupt Requests erfolgende Ausgabe von Interrupt Requests sind einzeln oder in beliebigen Kombinationen in beliebigen Interrupt-Conditioning-Einheiten einsetzbar.

Die beschriebene Vorrichtung zur Weiterleitung von empfangenen Interrupt Requests läßt sich unabhängig von den Einzelheiten der praktischen Realisierung in den unterschiedlichsten Modulen und Systemen einsetzen und ermöglicht sogar auf einen Verzicht auf eine gegenseitige Anpassung des Kernels 11 des ersten Moduls 1 und des zweiten Moduls 2.

Bezugszeichenliste
- 1: erstes Modul
- 2: zweites Modul
- 3: Interrupt Controller

- 11: Kernel
- 12: Interrupt-Conditioning-Einheit

- Ax: Zuordnungseinheiten
- BUS: Bus
- Ix: Eingangsanschlüsse von 12
- IDIV: einstellbarer Zählstand von SG1
- IMUL: einstellbarer Zählstand von SG2
- INx: Eingangsanschlüsse von 12
- INTCTLx: Anpassungseinheiten
- IRIN: Eingangsanschluß von INTCTL
- IROUT: Ausgangsanschluß von INTCTL
- Ox: Ausgangsanschlüsse von 12
- OUTx: Ausgangsanschlüsse von 12
- Sx: Schalter in 12
- SGx: Signalerzeugungsvorrichtungen

## Patentansprüche

1. Vorrichtung zur Weiterleitung von empfangenen Interrupt Requests, wobei die Vorrichtung auf den Empfang eines Interrupt Requests hin mehrere Interrupt Requests ausgibt,
**dadurch gekennzeichnet,**
**daß** die Vorrichtung bis zum Empfang einer ersten Anzahl (IDIV) von Interrupt Requests keine Interrupt Requests ausgibt, und nach dem Empfang der ersten Anzahl von Interrupt Requests eine zweite Anzahl (IMUL) von Interrupt Requests ausgibt, wobei sowohl die erste Anzahl (IDIV) als auch die zweite Anzahl (IMUL) größer als 1 sind.

2. Vorrichtung nach Anspruch 1,
**dadurch gekennzeichnet,**
**daß** die Komponente (SG2), durch welche bewirkt wird, daß auf den Empfang eines Interrupt Requests hin mehrere Interrupt Requests ausgegeben werden, einen Zähler enthält, der die ausgegebenen Interrupt Requests zählt und dafür sorgt, daß bis zum Erreichen eines bestimmten Zählstandes (IMUL) Interrupt Requests ausgegeben werden.

3. Vorrichtung nach Anspruch 2,
**dadurch gekennzeichnet,**
**daß** der bestimmte Zählstand (IMUL) statisch oder dynamisch wunschgemäß einstellbar ist.

4. Vorrichtung nach einem der vorhergehenden Ansprüche,
**dadurch gekennzeichnet,**
**daß** die Komponente (SG1), durch welche bewirkt wird, daß erst nach dem Empfang von mehreren Interrupt Requests ein Interrupt Request ausgegeben wird, einen Zähler enthält, der die empfangenen Interrupt Requests zählt und bis zum Erreichen eines bestimmten Zählstandes (IDIV) verhindert, daß ein Interrupt Request ausgegeben wird.

5. Vorrichtung nach Anspruch 4,
**dadurch gekennzeichnet,**
**daß** der bestimmte Zählstand (IDIV) statisch oder dynamisch wunschgemäß einstellbar ist.

6. Vorrichtung nach einem der vorhergehenden Ansprüche,
**dadurch gekennzeichnet,**
**daß** die Komponente (SG2), durch welche bewirkt wird, daß auf den Empfang eines Interrupt Requests hin mehrere Interrupt Requests ausgegeben werden, der Komponente (SG1), durch welche bewirkt wird, daß erst nach dem Empfang von mehreren Interrupt Requests ein Interrupt Request ausgegeben wird, nachgeschaltet ist.

7. Vorrichtung nach einem der vorhergehenden Ansprüche,
**dadurch gekennzeichnet,**
**daß** die Vorrichtung mit der Ausgabe eines Interrupt Requests wartet, bis davon ausgegangen werden kann, daß die durch einen zuvor ausgegebenen Interrupt Request anzustoßende Operation ausgeführt wurde.

8. Vorrichtung nach einem der vorhergehenden Ansprüche,
**dadurch gekennzeichnet,**
**daß** die Vorrichtung Zuordnungseinheiten (A1 bis A4) enthält, welche es ermöglichen, einen empfangenen Interrupt Request über verschiedene Ausgangsanschlüsse (O1 bis 03) der Vorrichtung auszugeben.

## Claims

1. Apparatus for relaying received interrupt requests, the apparatus outputting a plurality of interrupt requests in response to an interrupt request being received,
**characterized**
**in that** the apparatus outputs no interrupt requests until a first number (IDIV) of interrupt requests have been received, and outputs a second number (IMUL) of interrupt requests after the first number of interrupt requests have been received, both the first number (ISIV) and the second number (IMUL) being greater than 1.

2. Apparatus according to Claim 1,
**characterized**
**in that** the component (SG2), the effect of which is that a plurality of interrupt requests are output in response to an interrupt request being received, contains a counter which counts the interrupt requests output and ensures that interrupt requests are output until a specific count (IMUL) is reached.

3. Apparatus according to Claim 2,
**characterized**
**in that** the specific count (IMUL) is adjustable statically or dynamically as desired.

4. Apparatus according to Claim 1,
**characterized**
**in that** the component (SG1), the effect of which is that an interrupt request is not output until after a plurality of interrupt requests have been received, contains a counter which counts the received interrupt requests and prevents an interrupt request from being output until a specific count (IDIV) has been reached.

5. Apparatus according to Claim 4,
**characterized**
**in that** the specific count (IDIV) is adjustable statically or dynamically as desired.

6. Apparatus according to one of the preceding claims,
**characterized**
**in that** the component (SG2), the effect of which is that a plurality of interrupt requests are output in response to an interrupt request being received, is connected downstream of the component (SG1), the effect of which is that an interrupt request is not output until after a plurality of interrupt requests have been received.

7. Apparatus according to one of the preceding claims,
**characterized**
**in that** the apparatus waits to output an interrupt request until it can be assumed that the operation to be initiated by a previously output interrupt request has been executed.

8. Apparatus according to one of the preceding claims,
**characterized**
**in that** the apparatus contains assignment units (A1 to A4), which enable a received interrupt request to be output via different output terminals (O1 to 03) of the apparatus.

## Revendications

1. Dispositif pour transmettre des demandes d'interruption reçues, le dispositif délivrant plusieurs demandes d'interruption à la réception d'une demande d'interruption, **caractérisé en ce que** le dispositif ne délivre aucune demande d'interruption jusqu'à la réception d'un premier nombre (IDIV) de demandes d'interruption et, après la réception du premier nombre de demandes d'interruption, délivre un deuxième nombre (IMUL) de demandes d'interruption, le premier nombre (IDIV) ainsi que le deuxième nombre (IMUL) étant supérieurs à 1.

2. Dispositif selon la revendication 1, **caractérisé en ce que** le composant (SG2) grâce auquel plusieurs demandes d'interruption sont délivrées à la réception d'une demande d'interruption comprend un compteur qui compte les demandes d'interruption délivrées et veille à ce que des demandes d'interruption soient délivrées jusqu'à atteindre une valeur comptée donnée (IMUL).

3. Dispositif selon la revendication 2, **caractérisé en ce que** la valeur comptée donnée (IMUL) peut être réglée au choix de manière statique ou dynamique.

4. Dispositif selon l'une des revendications précédentes, **caractérisé en ce que** le composant (SG1) grâce auquel une demande d'interruption n'est délivrée qu'après réception de plusieurs demandes d'interruption comprend un compteur qui compte les demandes d'interruption reçues et empêche qu'une demande d'interruption soit délivrée avant d'avoir atteint une valeur comptée donnée (IDIV).

5. Dispositif selon la revendication 4, **caractérisé en ce que** la valeur comptée donnée (IDIV) peut être réglée au choix de manière statique ou dynamique.

6. Dispositif selon l'une des revendications précédentes, **caractérisé en ce que** le composant (SG2) grâce auquel plusieurs demandes d'interruption sont délivrées à la réception d'une demande d'interruption est branché à la suite du composant (SG1) grâce auquel une demande d'interruption n'est délivrée qu'après réception de plusieurs demandes d'interruption.

7. Dispositif selon l'une des revendications précédentes, **caractérisé en ce que** le dispositif attend avant de délivrer une demande d'interruption qu'il soit possible de supposer que l'opération à initier par une demande d'interruption délivrée précédemment a été accomplie.

8. Dispositif selon l'une des revendications précédentes, **caractérisé en ce que** le dispositif contient des unités d'affectation (A1 à A4) qui permettent de délivrer une demande d'interruption reçue sur différentes bornes de sortie (O1 à 03) du dispositif.
